# EUROPEAN PATENT APPLICATION

(11) **EP 4 197 759 A1**
(43) Date of publication of application: **21.06.2023**
(21) Application number: 22186091.9
(22) Date of filing: 20.07.2022
(51) Int. Cl.: B29C 70/48, B05D 1/04, B05D 1/26, B05D 1/28, B32B 5/02, B32B 5/26, B32B 17/02, B32B 27/12, B32B 27/18, B32B 27/20, B32B 27/38, B29C 70/88, B29C 70/02, B29C 70/54, B29C 70/00, B29C 70/08

(54) **HIGHLY FLAMEPROOF LAMINATED COMPOSITE MATERIAL AND MANUFACTURING METHOD THEREOF**

(30) Priority: 17.12.2021 CN 202111550943
(71) Applicant: Swancor Advanced Materials Co., Ltd., 201613 Shanghai (CN)
(72) Inventor: WU, TsoChang, 404026 Taichung City (TW); TSAI, YuTing, 510004 Yuanlin City (TW); LU, LeeChe, 406038 Taichung City (TW); CHEN, Hong Juan, Shanghai, 201613 (CN); CHEN, ChunAn, 540028 Nantou City (TW)
(74) Representative: D Young & Co LLP

(57) **Abstract**

A manufacturing method of a highly flameproof laminated composite material is provided in the present disclosure. The manufacturing method of the highly flameproof laminated composite material includes the steps as follows. A raw material is provided, a shaping step is performed and a combining step is performed. The raw material includes an inorganic powder and a polymer material. In the shaping step, the raw material is made into at least one inorganic layer, an inorganic sheet, a ply of film, or a layer of coating. In the combining step, the inorganic layer is made to be connected to a surface of a substrate, so as to obtain the highly flameproof laminated composite material. A weight ratio of the inorganic powder and the polymer material is 0.01 - 0.1, and a thickness of the inorganic layer is 0.1 mm - 8.0 mm.

## Description

### BACKGROUND

### Technical Field

The present disclosure relates to a flameproof composite material and a manufacturing method thereof. More particularly, the present disclosure relates to a highly flameproof laminated composite material which is obtained by processing at least one inorganic layer complied with various suitable manufacturing methods thereof.

### Description of Related Art

The conventional flameproof composite material includes an inorganic filler and a resin, and the manufacturing process thereof is as follows. First, the inorganic filler and the resin are mixed into a slurry, and the slurry is applied onto a substrate. After the slurry is combined with the substrate, the conventional flameproof composite material can be obtained. The weight ratio of the inorganic filler and the resin should be over 0.5, so as to achieve sufficient flameproof properties. However, high ratio of inorganic filler will make the slurry become too viscous, and make the fluidity of the slurry decrease. Thus, the inorganic filler is prone to poor distribution, which affects the operability of the manufacturing process and the product quality. The weight and volume of the flameproof composite material will significantly increase with high ratio of inorganic filler, resulting in limitations on applications of the flameproof composite material.

In this regard, it is still an unsolved problem to reduce the limitations on applications of the flameproof composite material and improve the operability of the manufacturing process of the flameproof composite material.

### SUMMARY

According to one aspect of the present disclosure, a manufacturing method of a highly flameproof laminated composite material includes the steps as follows. A raw material is provided, a shaping step is performed and a combining step is performed. The raw material includes an inorganic powder and a polymer material. In the shaping step, the raw material is made into at least one inorganic layer. In the combining step, the inorganic layer is made to be connected to a surface of a substrate, so as to obtain the highly flameproof laminated composite material. A weight ratio of the inorganic powder and the polymer material is 0.01 - 0.1, and a thickness of the inorganic layer is 0.1 mm - 8.0 mm.

According to the aforementioned manufacturing method of the highly flameproof laminated composite material, the inorganic powder can be selected from the group consisting of sodium metasilicate, calcium carbonate, aluminum potassium sulfate, metakaolin, inorganic phosphate, pentaerythritol, aluminum hydroxide, expanded graphite, silicon dioxide, magnesium hydroxide and aluminum powder.

According to the aforementioned manufacturing method of the highly flameproof laminated composite material, the polymer material can include a resin ingredient, and the resin ingredient can be selected from the group consisting of bisphenol-A type epoxy resin, bisphenol-F type epoxy resin, polyphenol type glycidyl ether epoxy resin, aliphatic glycidyl ether epoxy resin, glycidyl ester type epoxy resin, glycidyl amine type epoxy resin, epoxidized alkene, heterocyclic type and polycyclic type epoxy resin, phenol formaldehyde resin, vinyl ester resin, unsaturated polyester resin, bismaleimide resin, bismaleimide triazine resin, cyanate ester resin, benzoxazine resin and acrylic resin.

According to the aforementioned manufacturing method of the highly flameproof laminated composite material, the polymer material can include a curing agent, and the curing agent can be selected from the group consisting of aliphatic amine, cycloaliphatic amine, aromatic amine, polyamide, anhydride, resin, tertiary amine, imidazole and urea.

According to the aforementioned manufacturing method of the highly flameproof laminated composite material, in the shaping step, the raw material can be made into the at least one inorganic layer by a slot-die coating method or a laminating coating method.

According to the aforementioned manufacturing method of the highly flameproof laminated composite material, the raw material can be coated into the at least one inorganic layer under a temperature of 20°C - 60°C.

According to the aforementioned manufacturing method of the highly flameproof laminated composite material, in the shaping step, the raw material can be made into the at least one inorganic layer by an electrostatic coating method.

According to the aforementioned manufacturing method of the highly flameproof laminated composite material, in the shaping step, the raw material can be made into the at least one inorganic layer by a paper machine.

According to the aforementioned manufacturing method of the highly flameproof laminated composite material, a fiber weight per unit of area of the at least one inorganic layer can be 30 gsm - 1500 gsm.

According to the aforementioned manufacturing method of the highly flameproof laminated composite material, the raw material can further include an adhesive, the adhesive can be selected from the group consisting of synthetic pulp, synthetic fiber, polyvinyl alcohol fiber, polyethylene terephthalate fiber, polycarbonate fiber, polyphenylene sulfide fiber, composite fiber, alkene polymer emulsion, alkene copolymer emulsion, butadiene-based rubber, latex and acrylic latex, and a ratio of the adhesive to the raw material can be 5 wt% - 30 wt%.

According to the aforementioned manufacturing method of the highly flameproof laminated composite material, in the combining step, the at least one inorganic layer can be connected to the surface of the substrate by a vacuum assisted resin transfer molding method, and the at least one inorganic layer can be connected to the surface of the substrate under a vacuum degree of 300 mmHg - 760 mmHg and a temperature of 20°C - 60°C.

According to the aforementioned manufacturing method of the highly flameproof laminated composite material, in the combining step, the at least one inorganic layer can be connected to the surface of the substrate by a compression molding method, and the at least one inorganic layer can be connected to the surface of the substrate under a pressure of 2 kg/cm² - 20 kg/cm² and a temperature of 20°C - 380°C.

According to the aforementioned manufacturing method of the highly flameproof laminated composite material, a material of the substrate can be selected from the group consisting of carbon fiber, graphite fiber, aromatic polyamide fiber, silicon carbide fiber, aluminum oxide fiber, boron fiber, tungsten carbide fiber and glass fiber.

According to the aforementioned manufacturing method of the highly flameproof laminated composite material, in the combining step, the substrate can be pre-impregnated before the at least one inorganic layer is connected to the surface of the substrate.

According to another aspect of the present disclosure, a highly flameproof laminated composite material is made by the manufacturing method of the highly flameproof laminated composite material of the aforementioned aspect. The highly flameproof laminated composite material includes the substrate and the at least one inorganic layer. The inorganic layer is attached to the surface of the substrate.

According to the aforementioned highly flameproof laminated composite material, the highly flameproof laminated composite material can further include a covering layer, which can be attached to a surface of the at least one inorganic layer away from the substrate.

According to the aforementioned highly flameproof laminated composite material, a basis weight of the highly flameproof laminated composite material can be 30 gsm - 1500 gsm.

### BRIEF DESCRIPTION OF THE DRAWINGS

The present disclosure can be more fully understood by reading the following detailed description of the embodiment, with reference made to the accompanying drawings as follows:
Fig. 1 is a flow chart of a manufacturing method of a highly flameproof laminated composite material according to the present disclosure.
Fig. 2A is a structural view of a highly flameproof laminated composite material according to the 2nd example.
Fig. 2B is a partial microscopic view at the 2B region of the highly flameproof laminated composite material of Fig. 2A.
Fig. 3A is a structural view of a highly flameproof laminated composite material according to the 3rd example.
Fig. 3B is a partial microscopic view at the 3B region of the highly flameproof laminated composite material of Fig. 3A.

### DETAILED DESCRIPTION

The present disclosure will be further exemplified by the following specific embodiments. However, the embodiments can be applied to various inventive concepts and can be embodied in various specific ranges. The specific embodiments are only for the purposes of description, and are not limited to these practical details thereof.

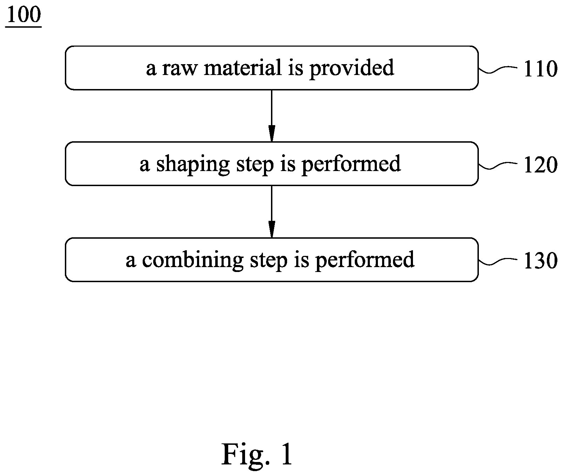

Please refer to Fig. 1. Fig. 1 is a flow chart of a manufacturing method of a highly flameproof laminated composite material 100 according to the present disclosure. The manufacturing method of the highly flameproof laminated composite material 100 is provided according to one aspect of the present disclosure. The manufacturing method of the highly flameproof laminated composite material 100 includes Step 110, Step 120 and Step 130.

In Step 110, a raw material is provided. The raw material includes an inorganic powder and a polymer material. The inorganic powder can be evenly distributed with the help of the polymer material in the raw material, and the flameproof effect of the highly flameproof laminated composite material can be consistent. A weight ratio of the inorganic powder and the polymer material is 0.01 - 0.1. It gives the highly flameproof laminated composite material sufficient flameproof property, and prevents an aggregation of the inorganic powder due to a high ratio thereof, which may affect the following processes.

The inorganic powder can be selected from the group consisting of sodium metasilicate, calcium carbonate, aluminum potassium sulfate, metakaolin, inorganic phosphate, pentaerythritol, aluminum hydroxide, expanded graphite, silicon dioxide, magnesium hydroxide and aluminum powder, or other inorganic materials with flameproof properties, which is not limited thereto in the present disclosure.

The polymer material can include a resin ingredient, and the resin ingredient can be selected from the group consisting of bisphenol-A type epoxy resin, bisphenol-F type epoxy resin, polyphenol type glycidyl ether epoxy resin, aliphatic glycidyl ether epoxy resin, glycidyl ester type epoxy resin, glycidyl amine type epoxy resin, epoxidized alkene, heterocyclic type and polycyclic type epoxy resin, phenol formaldehyde resin, vinyl ester resin, unsaturated polyester resin, bismaleimide resin, bismaleimide triazine resin, cyanate ester resin, benzoxazine resin and acrylic resin. The resin ingredient can be other polymers which can be mixed with the inorganic powder and processed easily, and it is not limited thereto in the present disclosure.

The polymer material can include a curing agent, and the curing agent can be selected from the group consisting of amines (such as aliphatic amine, cycloaliphatic amine, aromatic amine, polyamide or tertiary amine), anhydride, resin, imidazole and urea. The curing agent helps the aforementioned resin ingredient be cured, so the type and ratio of the curing agent can be adjusted according to the resin ingredient. Furthermore, the resin ingredient can be 80 parts - 150 parts by weight, and the curing agent can be 1 part - 50 parts by weight. Other corresponding additives can be added to meet different requirements of processes, so as to obtain the best material properties. For example, a defoamer can be added to break down the foams, a diluent can be added to enhance the fluidity of the raw material, or a wetting-dispersing agent can be added to improve the impregnation of the highly flameproof laminated composite material. However, the present disclosure is not limited thereto.

In Step 120, a shaping step is performed, so as to make the raw material into at least one inorganic layer. A thickness of the inorganic layer is 0.1 mm - 8.0 mm to obtain sufficient flameproof property thereof, and the light weight and small size of the highly flameproof laminated composite material can be maintained. For example, when the light-weighted highly flameproof laminated composite material is applied to rail transportation, the laminating method and process can be designed according to different structure thereof. The application of the highly flameproof laminated composite material can be wider, and the convenience of processing also increases.

In the shaping step, the inorganic layer can be formed by a slot-die coating method, a laminating coating method, an electrostatic coating method or a paper-machine process, and can be further made into an inorganic sheet. The present disclosure is not limited to the aforementioned manufacturing processes. The different shaping methods will be introduced respectively as follows. The type of the inorganic layer includes a layer of coatings, a ply of thin film, or a sheet of paper, which depends on the design of forming processes.

In the shaping step, the raw material can be made into the inorganic layer by the slot-die coating method or the laminating coating method. In the slot-die coating method, a scraper can be used to make the raw material flow or a coating head can be used to extrude the raw material, so as to make the raw material spread onto a coating plate. Then, the raw material is made into the inorganic sheet by heating or curing. In the laminating coating method, the raw material can be coated on a release paper by a coating roller, and the raw material is made into the inorganic sheet by heating or curing. Moreover, in the shaping step, the raw material can be coated into the inorganic sheet under a temperature of 20°C - 60°C. It ensures that the raw material has sufficient fluidity under the suitable temperature. The success rate of coating can be enhanced and defects on the inorganic sheet can be prevented.

Also, the raw material can be made into the inorganic layer by the electrostatic coating method. In detail, the raw material first forms charged raw material microparticles by high voltages. At the same time, the coating plate is charged oppositely, so as to make the raw material microparticles be attracted to the coating plate to form the inorganic sheet.

Please note that, if the inorganic sheet includes two or more inorganic layers, the inorganic sheet can be made by repeatedly coating with the slot-die coating method, the laminating coating method and/or the electrostatic coating method, and the present disclosure is not limited thereto.

Furthermore, the raw material can be made into the inorganic layer by a paper machine. That is, the raw material is poured into the headbox of the paper machine, and the raw material spreads onto a forming fabric through the headbox of the paper machine. The raw material forms the inorganic sheet after the steps such as compressed by rollers, heating and drying. A fiber weight per unit of area of the inorganic sheet can be 30 gsm - 1500 gsm, so as to ensure that the thickness and density of the inorganic sheet meet the requirements.

Moreover, as preparing the inorganic sheet by the paper machine, the raw material can further include an adhesive, and a ratio of the adhesive to the raw material can be 5 wt% - 30 wt%. The adhesive can help the combination among the fibers of the polymer material, so as to improve the mechanical properties of the inorganic sheet and enhance the combination between the inorganic sheet and a substrate. The adhesive can be selected from the group consisting of solid-state adhesives and liquid-state adhesives listed below. The solid-state adhesives can be synthetic pulp, synthetic fiber, polyvinyl alcohol (PVA) fiber, polyethylene terephthalate (PET) fiber, polycarbonate (PC) fiber, polyphenylene sulfide (PPS) fiber, composite fiber or other chemical fibers. The liquid-state adhesives can be divided into dispersible resin emulsion and rubber emulsion. The dispersible resin emulsion can be alkene polymer emulsion or alkene copolymer emulsion, which can include acrylic acid, vinyl acetate, propene or ethyl acrylate. The rubber emulsion can be butadiene-based rubber (such as styrene-butadiene rubber), latex or acrylic latex.

In Step 130, a combining step is performed to make the inorganic layer be connected to a surface of the substrate, so as to obtain the highly flameproof laminated composite material. A material of the substrate can be selected from the group consisting of carbon fiber, graphite fiber, aromatic polyamide fiber, silicon carbide fiber, aluminum oxide fiber, boron fiber, tungsten carbide fiber and glass fiber. The material of the substrate can be decided according to the purpose of the product, and according to the materials of the aforementioned inorganic powder and polymer material. Thus, the present disclosure is not limited to the aforementioned materials.

Furthermore, the substrate can be pre-impregnated before the inorganic layer is connected to the surface of the substrate. In this regard, the flameproof property of the substrate can be improved, or the combination strength between the inorganic layer and the substrate can be enhanced. Through the pre-impregnating process, it can improve the disadvantages of insufficient solubility and high forming temperature of specific materials, and the operability of the manufacturing process can be significantly enhanced.

In the combining step, the inorganic layer or the inorganic sheet can be connected to the substrate by a vacuum assisted resin transfer molding method or a compression molding method. The different combining methods will be introduced respectively as follows.

In the vacuum assisted resin transfer molding method, the inorganic sheet and the substrate are put into a vacuum bag together, and a reacting environment with a vacuum degree of 300 mmHg - 760 mmHg and a temperature of 20°C - 60°C is formed in the vacuum bag. The highly flameproof laminated composite material is obtained after the inorganic sheet is connected to the surface of the substrate. A glass substrate can be put into the vacuum bag to support the inorganic sheet and the substrate. A distribution net can also be put into the vacuum bag and above the inorganic sheet and the substrate. The distribution net can help the air in the vacuum bag flow and make the pressure in the vacuum bag even, which is favorable for the combination between the inorganic sheet and the substrate.

In the compression molding method, the inorganic sheet and the substrate are held between two hot plates. A pressure of 2 kg/cm² - 20 kg/cm² and a temperature of 20°C - 380°C are applied to the inorganic sheet and the substrate until the inorganic sheet is connected to the surface of the substrate, and the highly flameproof laminated composite material can be obtained.

A highly flameproof laminated composite material is provided according to another aspect of the present disclosure. The highly flameproof laminated composite material is made by the aforementioned manufacturing method of the highly flameproof laminated composite material 100. The highly flameproof laminated composite material includes the substrate and the inorganic layer, and the inorganic layer is attached to the surface of the substrate. A basis weight of the highly flameproof laminated composite material can be 30 gsm - 1500 gsm, which ensures that the density of the highly flameproof laminated composite material is enough, so as to improve the flameproof property of the highly flameproof laminated composite material.

The highly flameproof laminated composite material can further include a covering layer, which can be attached to a surface of the inorganic layer away from the substrate. The covering layer can be configured for ornamental purposes or protecting the inorganic layer and the substrate. Moreover, the covering layer can be connected to the surface of the inorganic layer in the aforementioned combining step, so as to reduce the complexity of the manufacturing process.

In the following part, the highly flameproof laminated composite material is prepared by the manufacturing method of the highly flameproof laminated composite material of the present disclosure, and is tested for fire protection on railway vehicles under EU standard (EN45545-2 test).

### <Flameproof Test>

In this test, EN45545-2 tests on the 1st example and the comparison are carried out to understand whether the highly flameproof laminated composite material prepared by the manufacturing method of the present disclosure has great flameproof property or not. The highly flameproof laminated composite material of the 1st example is prepared by the aforementioned manufacturing method of the highly flameproof laminated composite material. The substrate of the highly flameproof laminated composite material includes glass fiber mat and glass fiber woven roving. The raw material includes 100 parts of bisphenol-A type epoxy resin, 30 parts of curing agent of amines, 1 part of wetting-dispersing agent, 10 parts of aluminum hydroxide, 10 parts of expanded graphite, 10 parts of fire retardant of phosphide and 15 parts of PET adhesive. The highly flameproof laminated composite material of the 1st example is prepared by the vacuum assisted resin transfer molding method. The comparison is made by the manufacturing method of the conventional flameproof composite material, and includes 100 parts of resin and curing agent and 110 parts of aluminum hydroxide.

Then, EN45545-2 tests on the 1st example and the comparison are respectively carried out. The tests includes the maximum of average rate of heat emission (MARHE), the specific optical density at 4^{th} minute (Dₛ₄) and the cumulative value of specific optical densities in the first 4 minutes of the test (VOF₄). The test results are listed in Table 1 below.

| Table 1 | | | |
|---|---|---|---|
| | Test | Result | Flameproof Level |
| 1st Example | MARHE (kW/m²) | 13.3 | HL3 |
| | Ds4 | 92.5 | |
| | VOF₄ (min) | 194.4 | |
| Comparison | MARHE (kW/m²) | 110 | HL1 |
| | Ds4 | 310 | |
| | VOF₄ (min) | 500 | |

From the aforementioned test results, the highly flameproof laminated composite material of the present disclosure meets the standard of the highest level (HL3) of the EN45545-2 test. The flameproof composite material of the comparison only has the flameproof property of the lowest level (HL1). Thus, it proves that the highly flameproof laminated composite material of the present disclosure has great flameproof property.

### <2nd Example>

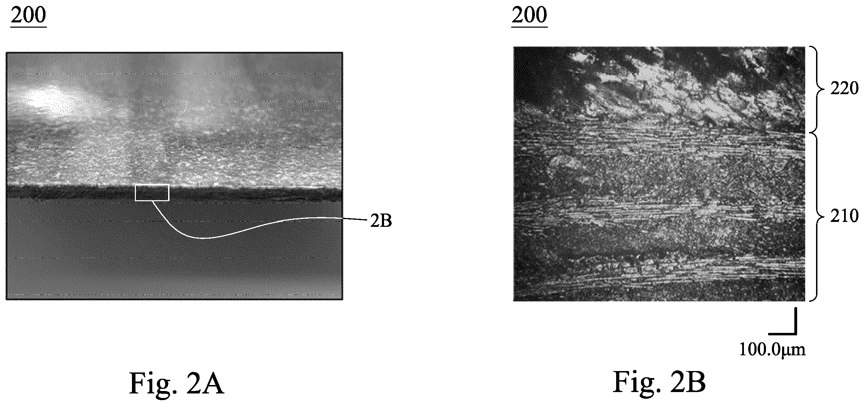

Please refer to Fig. 2A and Fig. 2B. Fig. 2A is a structural view of a highly flameproof laminated composite material 200 according to the 2nd example. Fig. 2B is a partial microscopic view at the 2B region of the highly flameproof laminated composite material 200 of Fig. 2A. The highly flameproof laminated composite material 200 of the 2nd example is prepared by the aforementioned manufacturing method of the highly flameproof laminated composite material. The raw material includes 100 parts of bisphenol-F type epoxy resin, 5 parts of dicyanodiamide, 1 part of urea, 1 - 2 parts of wetting-dispersing agent, 10 - 20 parts of ammonium polyphosphate, 5 - 10 parts of zinc borate and 5 - 10 parts of pentaerythritol. The highly flameproof laminated composite material 200 of the 2nd example is prepared by the compression molding method.

The highly flameproof laminated composite material 200 includes a substrate 210 and an inorganic sheet 220, and the substrate 210 is pre-impregnated. In Fig. 2B, there is no obvious separation between the substrate 210 and the inorganic sheet 220, which means that the combination between the substrate 210 and the inorganic sheet 220 is great.

### <3rd Example>

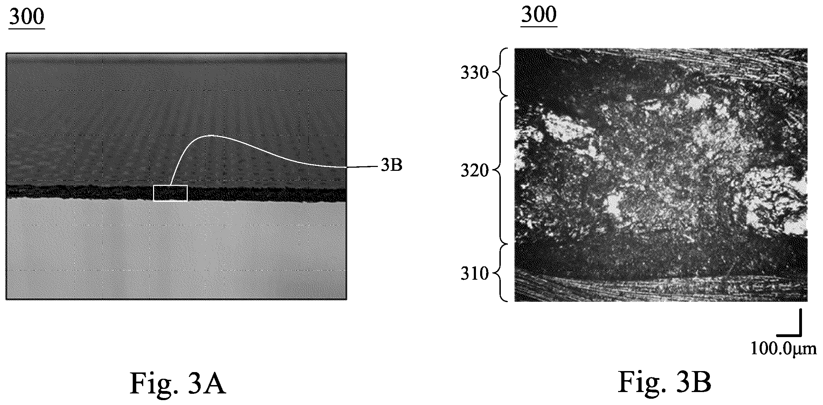

Please refer to Fig. 3A and Fig. 3B. Fig. 3A is a structural view of a highly flameproof laminated composite material 300 according to the 3rd example. Fig. 3B is a partial microscopic view at the 3B region of the highly flameproof laminated composite material 300 of Fig. 3A. The highly flameproof laminated composite material 300 of the 3rd example is prepared by the aforementioned manufacturing method of the highly flameproof laminated composite material, and is prepared by the compression molding method.

The highly flameproof laminated composite material 300 includes a substrate 310, an inorganic sheet 320 and a covering layer 330, and the substrate 310 and the covering layer 330 are pre-impregnated. In Fig. 3B, it shows that the covering layer 330 can change the appearance of the highly flameproof laminated composite material 300, which makes the highly flameproof laminated composite material 300 have special texture on the surface. Moreover, there is no obvious separation between the substrate 310, the inorganic sheet 320 and the covering layer 330, which means that the combinations between the substrate 310, the inorganic sheet 320 and the covering layer 330 are great.

In the manufacturing method of the highly flameproof laminated composite material according to the present disclosure, the inorganic powder is first manufactured into the inorganic sheet, and then the inorganic sheet is combined with the substrate. Hence, the inorganic powder can be effectively and evenly distributed in the polymer material, which facilitates the manufacturing process, and the light-weighted, small-sized highly flameproof laminated composite material can be manufactured for the applications in the industries with higher flameproof requirements, such as rail transportation, building materials, ships, aerospace, electric appliances and plastic pipes.

## Claims

1. A manufacturing method of a highly flameproof laminated composite material (200, 300), comprising:
providing a raw material comprising an inorganic powder and a polymer material;
performing a shaping step to make the raw material into at least one inorganic layer; and
performing a combining step to make the at least one inorganic layer be connected to a surface of a substrate (210, 310), so as to obtain the highly flameproof laminated composite material (200, 300);
wherein a weight ratio of the inorganic powder and the polymer material is 0.01 - 0.1, and a thickness of the at least one inorganic layer is 0.1 mm - 8.0 mm.

2. The manufacturing method of the highly flameproof laminated composite material (200, 300) of claim 1, wherein the inorganic powder is selected from the group consisting of sodium metasilicate, calcium carbonate, aluminum potassium sulfate, metakaolin, inorganic phosphate, pentaerythritol, aluminum hydroxide, expanded graphite, silicon dioxide, magnesium hydroxide and aluminum powder.

3. The manufacturing method of the highly flameproof laminated composite material (200, 300) of claim 1 or claim 2, wherein the polymer material comprises a resin ingredient, and the resin ingredient is selected from the group consisting of bisphenol-A type epoxy resin, bisphenol-F type epoxy resin, polyphenol type glycidyl ether epoxy resin, aliphatic glycidyl ether epoxy resin, glycidyl ester type epoxy resin, glycidyl amine type epoxy resin, epoxidized alkene, heterocyclic type and polycyclic type epoxy resin, phenol formaldehyde resin, vinyl ester resin, unsaturated polyester resin, bismaleimide resin, bismaleimide triazine resin, cyanate ester resin, benzoxazine resin and acrylic resin.

4. The manufacturing method of the highly flameproof laminated composite material (200, 300) of any one of claims 1-3, wherein the polymer material comprises a curing agent, and the curing agent is selected from the group consisting of aliphatic amine, cycloaliphatic amine, aromatic amine, polyamide, anhydride, resin, tertiary amine, imidazole and urea.

5. The manufacturing method of the highly flameproof laminated composite material (200, 300) of any one of claims 1-4, wherein in the shaping step, the raw material is made into the at least one inorganic layer by a slot-die coating method or a laminating coating method.

6. The manufacturing method of the highly flameproof laminated composite material (200, 300) of any one of claims 1-5, wherein the raw material is coated into the at least one inorganic layer under a temperature of 20°C - 60°C.

7. The manufacturing method of the highly flameproof laminated composite material (200, 300) of any one of claims 1-6, wherein in the shaping step, the raw material is made into the at least one inorganic layer by an electrostatic coating method.

8. The manufacturing method of the highly flameproof laminated composite material (200, 300) of any one of claims 1-7, wherein in the shaping step, the raw material is made into the at least one inorganic layer by a paper machine.

9. The manufacturing method of the highly flameproof laminated composite material (200, 300) of any one of claims 1-8, wherein a fiber weight per unit of area of the at least one inorganic layer is 30 gsm - 1500 gsm.

10. The manufacturing method of the highly flameproof laminated composite material (200, 300) of any one of claims 1-9, wherein the raw material further comprises an adhesive, the adhesive is selected from the group consisting of synthetic pulp, synthetic fiber, polyvinyl alcohol fiber, polyethylene terephthalate fiber, polycarbonate fiber, polyphenylene sulfide fiber, composite fiber, alkene polymer emulsion, alkene copolymer emulsion, butadiene-based rubber, latex and acrylic latex, and a ratio of the adhesive to the raw material is 5 wt% - 30 wt%.

11. The manufacturing method of the highly flameproof laminated composite material (200, 300) of any one of claims 1-10, wherein in the combining step, the at least one inorganic layer is connected to the surface of the substrate (210, 310) by a vacuum assisted resin transfer molding method, and the at least one inorganic layer is connected to the surface of the substrate (210, 310) under a vacuum degree of 300 mmHg - 760 mmHg and a temperature of 20°C - 60°C.

12. The manufacturing method of the highly flameproof laminated composite material (200, 300) of any one of claims 1-11, wherein in the combining step, the at least one inorganic layer is connected to the surface of the substrate (210, 310) by a compression molding method, and the at least one inorganic layer is connected to the surface of the substrate (210, 310) under a pressure of 2 kg/cm² - 20 kg/cm² and a temperature of 20°C - 380°C.

13. The manufacturing method of the highly flameproof laminated composite material (200, 300) of any one of claims 1-12, wherein a material of the substrate (210, 310) is selected from the group consisting of carbon fiber, graphite fiber, aromatic polyamide fiber, silicon carbide fiber, aluminum oxide fiber, boron fiber, tungsten carbide fiber and glass fiber.

14. The manufacturing method of the highly flameproof laminated composite material (200, 300) of any one of claims 1-13, wherein in the combining step, the substrate (210, 310) is pre-impregnated before the at least one inorganic layer is connected to the surface of the substrate (210, 310).

15. A highly flameproof laminated composite material (200, 300), which is made by the manufacturing method of the highly flameproof laminated composite material (200, 300) of any one of claims 1-14, the highly flameproof laminated composite material (200, 300) comprising:
the substrate (210, 310); and
the at least one inorganic layer attached to the surface of the substrate (210, 310).

16. The highly flameproof laminated composite material (200, 300) of claim 15, further comprising a covering layer (330), which is attached to a surface of the at least one inorganic layer away from the substrate (210, 310).

17. The highly flameproof laminated composite material (200, 300) of claim 15 or claim 16, wherein a basis weight of the highly flameproof laminated composite material (200, 300) is 30 gsm - 1500 gsm.
